(19) **Europäisches Patentamt European Patent Office Office européen des brevets**

(11) **EP 3 936 405 B1**

(12) **EUROPEAN PATENT SPECIFICATION**

(45) Date of publication and mention of the grant of the patent:
**30.08.2023 Bulletin 2023/35**

(21) Application number: **20825701.4**

(22) Date of filing: **18.05.2020**

(51) International Patent Classification (IPC):
**B61F 7/00** *(2006.01)* **B60B 35/10** *(2006.01)*
**B61F 15/26** *(2006.01)*

(52) Cooperative Patent Classification (CPC):
**B60B 35/1045; B60B 17/00; B60B 35/1081;**
**B61F 7/00;** B60Y 2200/30

(86) International application number:
**PCT/CN2020/090851**

(87) International publication number:
**WO 2020/253444 (24.12.2020 Gazette 2020/52)**

(54) **LOCKING MECHANISM FOR GAUGE-CHANGEABLE WHEEL SET, GAUGE-CHANGEABLE WHEEL SET AND GAUGE-CHANGEABLE BOGIE**

ARRETIERMECHANISMUS FÜR RADSATZ MIT VERÄNDERLICHER SPURWEITE, RADSATZ MIT VERÄNDERLICHER SPURWEITE UND WAGGON MIT VERÄNDERLICHER SPURWEITE

MÉCANISME DE VERROUILLAGE POUR ENSEMBLE DE ROUES À ÉCARTEMENT VARIABLE, ENSEMBLE DE ROUES À ÉCARTEMENT VARIABLE ET BOGIE À ÉCARTEMENT VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2019 CN 201910541187**
**21.06.2019 CN 201910541173**

(43) Date of publication of application:
**12.01.2022 Bulletin 2022/02**

(73) Proprietors:
• **CRRC Qingdao Sifang Co., Ltd.**
**Qingdao, Shandong 266111 (CN)**
• **Southwest Jiaotong University**
**Chengdu**
**Sichuan 610031 (CN)**

(72) Inventors:
• **MA, Lijun**
**Qingdao, Shandong 266111 (CN)**
• **ZHOU, Pingyu**
**Qingdao, Shandong 266111 (CN)**
• **WANG, Xu**
**Qingdao, Shandong 266111 (CN)**
• **QIAO, Qingfeng**
**Qingdao, Shandong 266111 (CN)**

• **LI, Hengkui**
**Qingdao, Shandong 266111 (CN)**
• **WANG, Yutao**
**Chengdu, Sichuan 610031 (CN)**
• **SONG, Xiaowen**
**Qingdao, Shandong 266111 (CN)**

(74) Representative: **Micheli & Cie SA**
**Rue de Genève 122**
**Case Postale 61**
**1226 Genève-Thônex (CH)**

(56) References cited:
EP-A1- 2 524 851      CN-A- 103 192 843
CN-A- 108 791 352      CN-A- 108 909 355
CN-A- 109 455 040      CN-A- 110 228 492
CN-A- 110 228 493      CN-A- 110 228 494
CN-A- 110 228 495      CN-A- 110 228 496
CN-A- 110 228 497      CN-A- 110 228 498
CN-A- 110 228 499      CN-U- 206 727 777
CN-U- 207 469 936      CN-U- 207 469 936
CN-Y- 200 951 774      CN-Y- 201 128 419
DE-A1- 19 533 959      DE-A1- 19 703 288
JP-A- 2018 202 908

# Description

## CROSS-REFERENCE TO RELATED APPLICATION

The present application claims priority to Chinese Application No. 2019105411737 filed on June 21, 2019, entitled "Locking Mechanism for Gauge-changing wheelset, Gauge-changing Wheelset" and Chinese Application No. 2019105411879 filed on June 21, 2019, entitled "Gauge-changing Wheelset and Gauge-changing Bogie".

## FIELD OF TECHNOLOGY

The present application relates to a technical field of rail vehicle for variable gauge, in particular to a locking mechanism for a gauge-changing wheelset, a gauge-changing wheelset and a gauge-changing bogie.

## BACKGROUND

In order to meet the transportation requirements between tracks with different gauges in neighboring countries, generally, bogies with different wheelset inner pitch are replaced at a border between countries, but such solution is costly and time-consuming. Bogies for variable gauge have been invented in Spain and then in Japan to enable continuous running of trains on tracks with different gauges.

However, traditional structures for variable gauge, especially locking mechanisms are all passive, and operations for changing gauge of the wheels need to be performed with an external auxiliary facility, which causes low efficiency and high investment cost.

DE19533959A1 discloses an electromagnetic type driving mechanism for road/track running type multiway car. The mechanism includes a number of wheels which are raisably mounted through a pneumatic actuator. A pair of guide rollers which has wheel flanges are connected to an turnable arm through an adjustment device. The self driving type guide rollers are engaged on a railway track and simultaneously the wheels are raised. An engine drives the guide roller while running on track. When the wheels are engaged, the engine power supply to the guide rollers is cut off and vice versa.

CN109455040A discloses a wheel set structure, a bogie and a vehicle. The wheel set structure comprises a rotating shaft; The wheel body is arranged on the rotating shaft; The locking part has a first position in contact with the wheel body and a second position separated from the wheel body; A driving component which is connected with the locking part to drive the locking part to move between the first position and the second position; Wherein, the driving component comprises an elastic part, which is driven and connected with the locking part to drive the locking part to move from the second position to the first position.

## BRIEF SUMMARY

(1) Technical problems to be solved

The present application is intended to address at least one of the technical problems existing in the prior art or related art.

The present application provides a locking mechanism for a gauge-changing wheelset, a gauge-changing wheelset, and a gauge-changing bogie so as to solve the problems that locking mechanisms in traditional structures for variable gauge are all passive, and operations for variable gauge need to be performed with external auxiliary apparatuses, which causes low efficiency and high investment cost.

(2) Technical solutions

In order to solve the above technical problems, an embodiment of the present invention provides a locking mechanism for a gauge-changing wheelset, wherein a plurality of locking holes are disposed on an inner hub of wheels of the gauge-changing wheelset at intervals in an axial direction; the locking mechanism comprising a traction electromagnet and a locking pin. The traction electromagnet includes a traction coil and a movable core being controlled to move by turning on and off the traction coil, the locking pin is fixedly connected to an end of the movable core away from the traction coil, and the movable core is configured to drive the locking pin to insert into or remove from the locking hole to lock or unlock the wheels.

The locking mechanism further includes a sleeve, the sleeve including a first sleeve and a second sleeve connected with the first sleeve; the first sleeve includes a first end cover and a first barrel extending toward the wheel side in a circumferential direction of the first end cover; and the first end cover is provided with an axial through hole, and is tightly connectable on an axle of the gauge-changing wheelset through the axial through hole. The second sleeve includes a second end cover integrally connected with the first barrel in the circumferential direction of the first barrel and a second barrel extending toward the wheel side in a circumferential direction of the second end cover; and, in a mounted position of the sleeve on the axle, the inner hub of wheel extend into the first barrel and is slidably fitted with the first barrel, and a through hole through which the movable core passes is disposed on an inner wall of the first barrel in a direction corresponding to a locking hole.

In an embodiment of the present application, each of the traction electromagnets further includes a housing, the housing is fixed on an inner side wall of the second end cover, the traction coil is disposed in the housing, and the movable core has an end penetrating through the traction coil, and is configured to drive the locking pin to pass through the through hole into a corresponding locking hole to lock the wheel and configured to drive the locking pin to remove from the locking hole to unlock the wheels.

In an embodiment of the present application, the traction electromagnet further includes chuck coils disposed on opposite sides of the movable core, respectively, and a lock pin being fit with each of the chuck coils, two annular lock grooves are disposed at intervals in an axial direction of the movable core and the lock pin is configured to be inserted into one of the annular lock grooves to fix the movable core in an unlocked position or a locked position.

In an embodiment of the present application, a cavity for accommodating an end of the lock pin is disposed on a position of the chuck coil on which the lock pin is mounted, the cavity having a gap in which the lock pin is movable, an end of the lock pin located outside the cavity is provided with an annular lug boss, and the lock pin is connected with a first spring having an end abutting against the annular lug boss and another end abutting against the outside of the cavity; and

a second spring is connected on an end of the movable core located outside the housing, an end of the second spring abuts against the outside of the housing, and another end of the second spring abuts against an annular flange at the end of the movable core.

In an embodiment of the present application, the gap within the cavity in which the lock pin is movable is 3-4 mm.

In an embodiment of the present application, the inner hub of the wheel is provided with a plurality of rows of the locking holes in a circumferential direction of the inner hub of the wheel, and each row of the locking holes includes a plurality of the locking holes disposed at intervals in the axial direction of the inner hub of the wheel, and a distance between two adjacent locking holes is equal to a half of the gauge to be changed; and the traction electromagnet includes a plurality of traction electromagnets distributed along an inner side wall of the second end cover in a circumferential direction, and the plurality of the traction electromagnets correspond to the plurality of rows of the locking holes one by one.

In an embodiment of the present application, a dust cover is connected on an outer periphery of the second barrel, and the dust cover includes an annular cover body and a retaining ring disposed on both ends of the annular cover body in an axial direction of the annular cover body, a plurality of electric brushes are disposed in the cover body, a pair of annular mounting grooves surrounding an outer circumference of the second barrel are disposed at intervals in an axial direction of the second barrel, and inner circumferences of retaining rings are respectively mounted in the annular mounting grooves; chips corresponding to the electric brushes ione by one are disposed on outer circumference of the second barrel and between the pair of annular mounting grooves, the chips are mounted on insulating rubbers, and the adjacent chips are spaced apart by the respective insulating rubber; and the traction coil and the chuck coils are respectively electrically connected to corresponding chips, the second barrel rotates with respect to the dust cover to form electric connections between the chips and the electric brushes rub so as to supply power to the traction coil and the chuck coils.

In an embodiment of the present application, the plurality of electric brushes include two pairs of electric brushes, the chips include two pairs of chips, the traction coil is electrically connected to one of the two pairs of the chips, and the chuck coil is electrically connected to another one of the two pairs of chips.

The two pairs of electric brushes are respectively connected to a power supply unit, and the power supply unit is connected to a control mechanism.

An embodiment of the present application also provides a gauge-changing wheelset, including wheels, an axle, and the above locking mechanism for the gauge-changing wheelset. The wheels are disposed on both ends of the axle and are splined to the axle. The inner hub of each wheel is provided with a plurality of locking holes at intervals in the axial direction, and the movable core is inserted into or removed from the locking holes under the action of the traction coils to achieve locking or unlocking of the wheels with respect to the axle.

An embodiment of the present application provides a gauge-changing wheelset, including wheels and an axle. The wheels are arranged at both ends of the axle and are splined to the axle, and both ends of the axle located outside the wheels are respectively supported in an axle box.

The gauge-changing wheelset further includes: a locking mechanism respectively disposed on the inner side of each of the wheels, the locking mechanism including a traction electromagnet which includes a traction coil and a movable core driven by the traction coil, a plurality of locking holes are disposed on an inner hub of each wheel at intervals in the axial direction and the movable core inserts into or removes from the locking hole to lock or unlock the wheels; and

a lateral drive mechanism respectively disposed on outside of each wheel, and fixed on the axle box body, the lateral drive mechanisms includes an electric cylinder having an extension end for pushing or pulling unlocked wheels to change gauge of wheels.

In an embodiment of the present application, the lateral drive mechanism further includes a movable disk, the movable disk includes a disk body provided with a central through hole and a bearing fixedly installed in the central through hole, and an inner ring of the bearing is fixedly connected on an outer hub of the wheel; the disk body is provided with a connecting hole connected with the extension end of the electric cylinder.

In an embodiment of the present application, each lateral drive mechanism includes two electric cylinders fixed in parallel on the axle box body, and the connecting holes are respectively disposed on opposite ends of the disk body, the extension end of each electric cylinder passes through the connecting hole, and the extension end of the electric cylinder is fixedly connected to the connecting hole by a fastener.

In an embodiment of the present application, the electric cylinder is a planetary roller screw electric cylinder, and a screw extension end of the planetary roller screw electric cylinder is provided with a positioning lug boss and an external thread, and the connecting holes is provided with a rubber node; the screw extension end passes through the rubber node and the positioning lug boss abuts against an end surface of the connecting hole, and the screw extension end is screwed on the external thread by a nut so that the nut abuts against another end surface of the connecting hole.

In an embodiment of the present application, the disk body is in a similar rhombus shape, and top corners of the similar rhombus shape are constructed as arcs that are transitionally connected to adjacent sides, and a pair of connecting holes are respectively disposed in a pair of top corners on the movable disk opposite to each other.

In an embodiment of the present application, the locking mechanism further includes a sleeve and a locking pin, the sleeve including a first sleeve and a second sleeve connected with the first sleeve; the first sleeve includes a first end cover and a first barrel, the first barrel extending toward the wheel side in a circumferential direction of the first end cover; and the first end cover is provided with an axial through hole, and is tightly connected on an axle through the axial through hole. The second sleeve includes a second end cover integrally connected with the first barrel in the circumferential direction of the first barrel and a second barrel extending toward the wheel side in a circumferential direction of the second end cover; and

the inner hub of the wheel extends into the first barrel, and the first barrel is provided with a through hole through which the movable core passes;

the traction electromagnet further includes a housing fixed on an inner side wall of the second end cover, the traction coil is disposed in the housing, and the movable core has an end penetrating through the traction coil and another other end fixedly connected to the locking pin; and the movable core is configured to drive the locking pin to pass through the through hole into a corresponding locking hole to lock the wheels, and configured to drive the locking pin to remove from the locking hole to unlock the wheels.

In an embodiment of the present application, the inner hub of the wheel is provided with a plurality of rows of the locking holes in a circumferential direction of the inner hub of the wheel, and each row of the locking holes includes a plurality of the locking holes disposed at intervals in the axial direction of the inner hub of the wheel, and a distance between two adjacent locking holes is equal to a half of the gauge to be changed, and the traction electromagnets further comprises chuck coils disposed on opposite sides of the movable core, respectively, and a lock pin fitted with each of the chuck coils, wherein two annular lock grooves are disposed at intervals in an axial direction of the movable core and the lock pin is configured to be inserted into one of the annular lock grooves to fix the movable core in an unlocked position or a locked position.

In an embodiment of the present application, a cavity for accommodating an end of the lock pin is disposed on a position of the chuck coil on which the lock pin is mounted, the cavity having a gap in which the lock pin is movable, an end of the lock pin located outside the cavity is provided with an annular lug boss, and the lock pin is connected with a first spring having an end abutting against the annular lug boss and another end abutting against the outside of the cavity; and

a second spring is connected on an end of the movable core located outside the housing, an end of the second spring abuts against the outside of the housing, and another end of the second spring abuts against an annular flange at the end of the movable core.

In an embodiment of the present application, the gauge-changing wheelset further includes a dust cover connected on an outer periphery of the second barrel, and the dust cover includes an annular cover body and a retaining ring disposed on both ends of the annular cover body in an axial direction of the annular cover body; a plurality of electric brushes are disposed in the cover body, a pair of annular mounting grooves surrounding an outer circumference of the second barrel are disposed at intervals in an axial direction of the second barrel, and inner circumferences of retaining rings are respectively mounted in the annular mounting groove. Chips corresponding to the electric brushes one by one are disposed on outer circumference of the second barrel and between the pair of annular mounting grooves, the chips are mounted on insulating rubbers, and the adjacent chips are spaced apart by the respective insulating rubber. The traction coil and the chuck coils are respectively electrically connected to corresponding chips, the second barrel rotates with respect to the dust cover to form electric connections between the chips and the electric brushes rub so as to supply power to the traction coil and the chuck coils.

In an embodiment of the present application, the plurality of electric brushes include two pairs of electric brushes, the chips include two pairs of chips, the traction coil is electrically connected to one of the two pairs of the chips, and the chuck coil is electrically connected to another one of the two pairs of chips.

The two pairs of electric brushes are respectively connected to a power supply unit, and the power supply unit is connected to a control mechanism.

An embodiment of the present application also provides a gauge-changing bogie including the above gauge-changing wheelset.

Beneficial effects

Compared with the prior art, the present application has the following advantages:
In the locking mechanism for a gauge-changing wheelset, a gauge-changing wheelset and a gauge-changing bogie, the locking mechanism includes a traction electromagnets and a locking pin, the locking pins are driven to extend or contract to lock and unlock the wheels by the movable core being controlled based on the turning on and off the traction electromagnet. The wheels can be locked and unlocked directly without external apparatuses such that the ground apparatus for variable gauge becomes simpler. Moreover, signals for variable gauge are output by a vehicle control system which improves the reliability and efficiency of operations for variable gauge, and also saves the cost of laying external apparatuses. In addition, based on the lateral movement of the wheels by the lateral drive mechanism, the wheels 4 can move laterally more stable, the wear between the wheels and the axle may be decreased, and the reliability of the gauge-changing wheelset is improved.

**BRIEF DESCRIPTION OF THE DRAWINGS**

FIG. 1 is a three-dimensional schematic diagram of a gauge-changing wheelset according to an embodiment of the present application;

FIG. 2 is a schematic diagram of a power gauge-changing wheelset according to an embodiment of the present application;

FIG. 3 is a schematic diagram of a non-power gauge-changing wheelset according to an embodiment of the present application;

FIG. 4 is a three-dimensional schematic diagram of a wheel of a gauge-changing wheelset according to an embodiment of the present application;

FIG. 5 is an axial cross-sectional schematic diagram showing a lateral drive mechanism of a gauge-changing wheelset according to an embodiment of the present application;

FIG. 6 is a three-dimensional schematic diagram of a movable disk in a gauge-changing wheelset according to an embodiment of the present application;

FIG. 7 is an axial cross-sectional schematic diagram showing a locking mechanism for a gauge-changing wheelset according to an embodiment of the present application;

FIG. 8 is a partial enlarged view of A in FIG. 7;

FIG. 9 is a schematic diagram of a traction electromagnet in a locking mechanism according to an embodiment of the present application;

FIG. 10 is a three-dimensional schematic diagram of a dust cap according to an embodiment of the present application;

FIG. 11 is a three-dimensional schematic diagram of a dust cap according to an embodiment of the present application from another angle;

Reference number: 1 lateral drive mechanism; 11 electric cylinder; 12 nut; 2 brake disc; 3: locking mechanism; 31 sleeve; 311 first sleeve; 3111 first end cover; 3112 first barrel; 312 second sleeve; 3121 second end cover; 3122 second barrel; 32 traction electromagnet; 32-1 traction coil; 32-2 movable core; 33 locking pin; 34 chuck coil; 35 lock pin; 4: wheel; 41: locking hole; 5: axle; 6: dust cap; 61: electric brush; 62: chip; 63 insulating rubber; 64 hanger; 7 axle box body; 8 movable disk; 81 movable disk retaining ring; 82 connecting hole; 9 four-point angular contact ball bearing; 91 bearing inner retaining ring; 10 drive motor.

**DETAILED DESCRIPTION**

The specific embodiments of the present application are further described in detail below with reference to the drawings and embodiments. The following embodiments are intended to illustrate the application, but are not intended to limit the scope of the application.
In the description of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the present application and simplifying the description, rather than indicating or implying that the device or component stated must have a particular orientation, is constructed and operated in a particular orientation, and thus is not to be construed as limiting the application.
In the description of the present application, it is to be noted that unless explicitly stated and defined otherwise, the terms "installed/mounted", "connected with," and "connected" shall be understood broadly, for example, it may be either fixedly connected or detachably connected, or can be integrated; it may be mechanically connected, or electrically connected; it may be directly connected, or indirectly connected through an intermediate medium and the communication between the interior of two elements. The specific meanings of the terms above in the present application can be understood by a person skilled in the art in accordance with specific conditions.

Further, in the description of the present application, "multiple", "a plurality of", and "multiple groups" mean two or more unless otherwise specified.

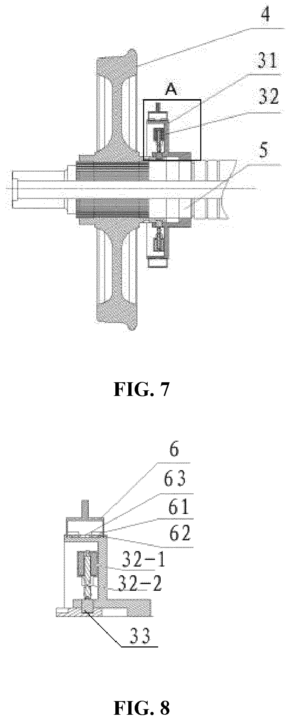

As shown in FIGS. 7-9, the embodiment of the present application provides a locking mechanism for a gauge-changing wheelset.

Specifically, the locking mechanism 3 includes a traction electromagnet 32 and a locking pin 33. Traction electromagnet 32 includes a traction coil 32-1 and a movable core 32-2 being controlled to move by turning on and off the traction coil 32-1, a plurality of locking holes 41 are disposed on inner hubs of wheels of a gauge-changing wheelset at intervals in an axial direction, the position of the traction coil 32-1 is fixed, and the movable core 32-2 is directed to the position of one of the locking holes 41, the locking pins 33 are fixedly connected to an end of the movable core 32-2 away from the traction coil 32-1, that is, the end facing the locking holes 41. Further, the movable core 32-2 and the locking hole 41 is arranged coaxially, and the movable core 32-2 drives the locking pin 33 to insert into or remove from a corresponding locking hole 41. Specifically, when the vehicle is running normally, the locking pin 33 is located in a locking hole 41 corresponding to a gauge and they are locked to each other. When the gauge needs to be changed, the wheels 4 need to be unlocked first. At this time, the traction coil 32-1 is energized, and the movable core 32-2 moves in a direction close to the traction coil 32-1 under the action of a magnetic force of the traction coil 32-1 and the locking pin 33 is driven to be retracted and removed from the locking hole 41 to lock the wheels.

In the present embodiment, the wheels 4 are locked and unlocked directly by the traction electromagnet 32 without additionally providing a structure for assisting locking and unlocking on a ground apparatus for variable gauge, and thus the structure of the ground apparatus for variable gauge is simplified and becomes relatively simple and more reliable and the cost is saved.

In an embodiment of the present application, as shown in FIGS. 7 and 8, the locking mechanism 3 further includes a sleeve 31. The sleeve 31 transmits a lateral force of the wheel 4 through an interference fit with the axle 5.

Specifically, the sleeve 31 includes a first sleeve 311 and a second sleeve 312 connected with the first sleeve 311; the first sleeve 311 includes a first end cover 3111 and a first barrel 3112 extending toward the side of the wheel 4 along the first end cover 3111 in a circumferential direction; and the first end cover 3111 is provided with an axial through hole, and is tightly connected on the axle 5 through the axial through hole. In other words, the first end cover is in an interference fit with the axle 5. The second sleeve 312 includes a second end cover 3121 integrally connected with the circumferential direction of the first barrel 3112 and a second barrel 3122 extending toward the wheel 4 along the second end cover 3121 in a circumferential direction.

The inner hub of the wheel 4 extends into the first barrel 3112 and is slidably fitted with the first barrel 3112. An inner wall of the first barrel 3112 corresponding to each locking hole 41 is provided with a through hole for the movable core 32-2 to pass through. In the present embodiment, the axis of the through hole is located on a plane where the axes of a plurality of locking holes 41 are located. One locking hole 41 on the inner hubs of the wheel 4 is corresponding to the position of the through hole. When the wheels 4 move laterally, the inner hub of the wheels 4 moves with respect to the first barrel 3112 until it moves that another locking hole 41 corresponds to the position of the through hole. It can be understood that, "one locking hole 41" and "another locking hole 41" correspond to the gauge;

In order to facilitate the installation and fixation of the traction coil 32-1, the traction electromagnet 32 further includes a housing being fixed on an inner side wall of the second end cover, and the traction coil 32-1 is arranged in the housing; one end of the movable core 32-2 passes through the traction coil 32-1, the other end of the movable core 32-2 is fixedly connected to the locking pins 33, and the locking pins 33 may be fixedly connected to the end of the movable core 32-2 away from the traction coil 32-1 by connecting parts such as bolts and screws; through the movable core 32-2, the locking pins 33 are driven to pass through the through hole and into the locking holes 41 corresponding to the gauge such that the wheels 4 are locked, while through the movable core 32-2, the locking pins 33 are driven to exit the locking holes 41 such that the wheels 4 are unlocked. The wheels are easily locked and unlocked and have high locking and unlocking reliability.

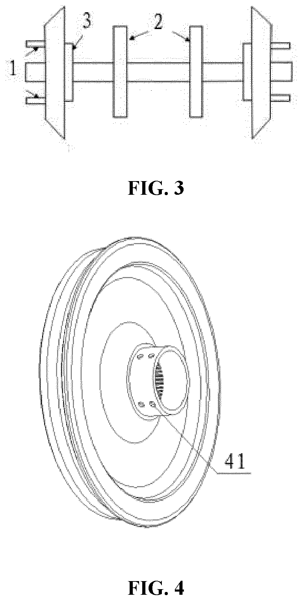

In an embodiment of the present application, as shown in FIG. 4, in order to improve reliability, the inner hub of the wheel 4 is provided with a plurality of rows of the locking holes 41 in the circumferential direction, and each row of the locking holes 41 includes a plurality of the locking holes 41 arranged at intervals in the axial direction, and the distance between two adjacent locking holes 41 is equal to a half of the gauge to be changed. When the gauge is changed, two wheels 4 move simultaneously, the two wheels 4 each move a half of the gauge to be changed, that is, the total moving distance of the two wheels 4 is equal to the gauge to be changed, for example, changing from a standard gauge to a narrow gauge or broad gauge; or from a narrow gauge or broad gauge to a standard gauge, which may be selected according to specific requirements.

Correspondingly, the traction electromagnet includes a plurality of traction electromagnets, a plurality of the traction electromagnets 32 are distributed along the inner side wall of the second end cover in a circumferential direction, and the plurality of the traction electromagnets 32 correspond to a plurality of rows of the locking holes 41 one by one, that is, each traction electromagnet 32 corresponds to a row of locking holes 41.

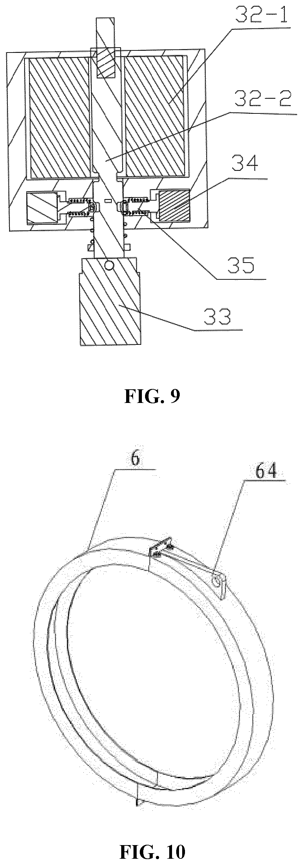

In order to improve the reliability of the movable core 32-2 in the locked state and the unlocked state, as shown in FIG. 9, the traction electromagnet 32 further includes chuck coils respectively arranged on opposite sides of the movable core 32-2 34, and a lock pin 35 being fitted with each of the chuck coils 34. Two annular lock grooves are disposed on the movable core 32-2 at intervals in an axial direction, and one the two annular lock grooves is opposite to the lock pin 35. The lock pin 35 is configured to be inserted into one of the annular lock grooves to fix the movable core 32-2 in the unlocked position or the locked position. That is, when the movable core 32-2 is inserted into the through hole and the locking hole 41, the lock pin 35 is inserted into the corresponding annular lock groove to fix the movable core 32-2 in the locking position to improve the reliability of the locking. After the movable core 32-2 exits from the corresponding locking hole 41, the lock pin 35 is inserted into the corresponding annular lock groove to fix the movable core 32-2 in the unlocking position, which improves the unlocking reliability and can avoid the mis-operation of the movable core 32-2.

In an embodiment of the present application, the lock pin 35 is T-shaped, and a cavity for accommodating the large end of the lock pin 35 is disposed on a position where the lock pin 35 is provided with the chuck coil 34 and the cavity has a gap in which the lock pin 35 moves in the axial direction and the size of the cavity may be 3-4mm, preferably 3 mm. An end of the lock pin 35 outside the cavity is provided with an annular lug boss, the lock pin 35 is connected with a first spring having one end abutting against the annular lug boss and other end abutting against the outer side of the cavity. When the chuck coil 34 is energized, the lock pin 35 is attracted by a magnetic force of the chuck coil 34 to overcome an elastic force of the first spring, and moves in the direction away from the movable core 32-2 until it exits from the movable core 32-2. At this time, the movable core 32-2 may perform an unlocking operation or locking operation. When the unlocking or locking is completed, the chuck coil 34 is de-energized, the lock pin 35 is reinserted into the corresponding annular lock groove under the action of the restoring force of the first spring, and the movable core 32-2 is positioned in the unlocked or locked state.

A second spring is connected on one end of the movable core 32-2 outside the housing, one end of the second spring abuts against the outside of the housing, and the other end of the second spring abuts against an annular flange at the end of the movable core 32-2. Through the second spring, the movable core 32-2 can be quickly reset after the traction coil 32-1 is de-energized. During changing the gauge, the operating process of the traction electromagnet 32 is as follows: first, the chuck coil 34 is energized, and the lock pin 35 is attracted to overcome the spring force such that the lock pin 35 extends exit the annular lock groove of the movable core 32-2. The lock pin 35 inserts into the annular groove of the movable core 32-2 by 3mm, that is, the attraction surface of the lock pin 35 is 3mm away from the chuck, and a miniature chuck may be used since the magnetic force in the air gap of 3mm is relatively large. Then, the traction coil 32-1 is energized, and the movable core 32-2 drives the locking pin 33 to remove from the locking hole 41, and the wheel 4 is unlocked. Furthermore, before the wheel 4 moves laterally, the chuck coil 34 is powered off first, and the lock pin 35 is clipped in the annular lock groove at the lower end of the movable core 32-2 to keep the movable core 32-2 in the unlocked position of the wheel 4, and then the traction coil 32-1 is de-energized, which may prevent the coil from being burned due to being energized for a long time. Finally, after changing gauge is completed, the chuck coil 34 is energized, the movable core 32-2 is unlocked, moves downward under the action of a restoring force of the second spring, and drives the locking pin 33 to move down to the locking hole 41 on the hub of wheel 4, the wheel 4 is locked again. The chuck coil 34 is de-energized, and the movable core 32-2 is clipped by the locking pin 35 to prevent that it drives the locking pin 33 to move radially under the action of centrifugal force thereby unlocking the wheel 4.

Since the operating voltage of the AC electromagnet is generally AC 220V, the temperature rises during operation, when the movable core 32-2 is clipped, the electromagnet is easily burned out due to excessive current and thus has a short service life. DC electromagnets generally adopt 24V DC voltage, and generally will not be burnt out since the movable core 32-2 is clipped. They are small in size and have a long service life and smaller start-up force than AC electromagnets. Because the starting power is not large here, DC power supply can be adopted.

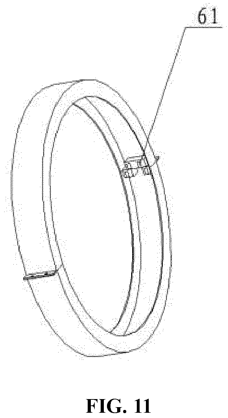

In an embodiment of the present application, as shown in FIGS. 10 and 11, the gauge-changing wheelset further includes a dust cap 6 connected on the outer periphery of the second barrel, and the dust cap 6 includes an annular cap body and retaining rings disposed on both ends of the annular cap body. A plurality of electric brushes 61 are disposed inside the cap body, a pair of annular mounting grooves surrounding the outer circumference of the second barrel are disposed at intervals in the axial direction of the second barrel, and the inner circumferences of the retaining rings are respectively mounted in the annular mounting groove. In actual use, the dust cap 6 is fixed and the second barrel rotates with the wheels 4. Chips 62 corresponding to the electric brushes 61 one by one are disposed on outer circumference of the second barrel and between the annular mounting grooves. In order to prevent the loop current on the wheel 4 and the axle 5 from being transmitted to the chips 62 such that the coil electrical operating when it is not required, insulating rubber 63 is wrapped around each chip 62, only the side matching with the electric brush 61 is exposed, that is, the chips 62 are mounted on the insulating rubber 63, and the adjacent chips 62 are spaced apart by the insulating rubber 63 so as to prevent short circuits. The traction coil 32-1 and the chuck coil 34 are respectively electrically connected to the corresponding chip 62, the second barrel rotates with respect to the dust cap 6 so that the chips 62 and the electric brushes 61 rub to form electric connection so as to supply power to the traction coil 32-1 and the chuck coil 34. In order to facilitate the installation of the dust cap 6, the dust cap 6 is configured to be made up of two parts, and two electric brushes 61 are disposed on each part.

In an embodiment of the present application, the electric brushes 61 includes two pairs of electric brushes, the chips 62 includes two pairs of chips, the traction coil 32-1 is electrically connected to one pair of the chips 62, and the chuck coil 34 is electrically connected to the other pair of chips 62.

The two pairs of electric brushes 61 are respectively connected to a power supply unit, and the power supply unit is connected to a control mechanism being configured to control the power supply unit to supply power to the traction coil 32-1 and/or the chuck coil 34. The control mechanism may be a control mechanism of the train itself.

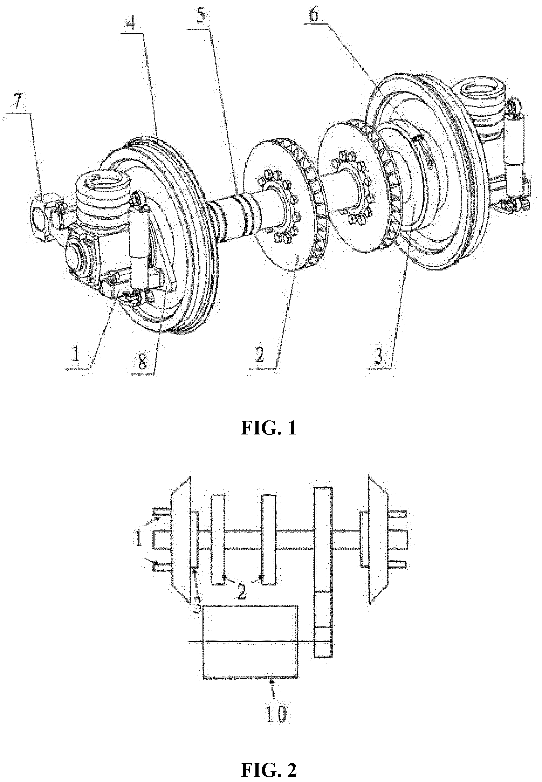

As shown in FIG. 1, an embodiment of the present application also provides a gauge-changing wheelset, including wheels 4 and an axle 5. The wheels 4 are disposed on both ends of the axle 5 and splined to the axle 5. Specifically, the inner circumference of each of the wheels 4 is provided with an inner spline, the axle 5 is provided with an outer spline, and the wheels 4 and the axle 5 are in fit connection through the inner spline and the outer spline to evenly distribute torques on the inner circumferences of the wheels 4 which not only convenient to transmit torque, but also convenient for the wheels 4 to slide along the axle 5 to change the gauge. Both ends of the axle 5 located outside the wheels 4 are respectively supported in an axle box body 7 providing support for the wheelset. In the present embodiment, the hub of each of the wheels 4 extends outside the wheels 4 and inside the wheels 4, and thus an outer hub and an inner hub are formed to facilitate the installation of components matched therewith.

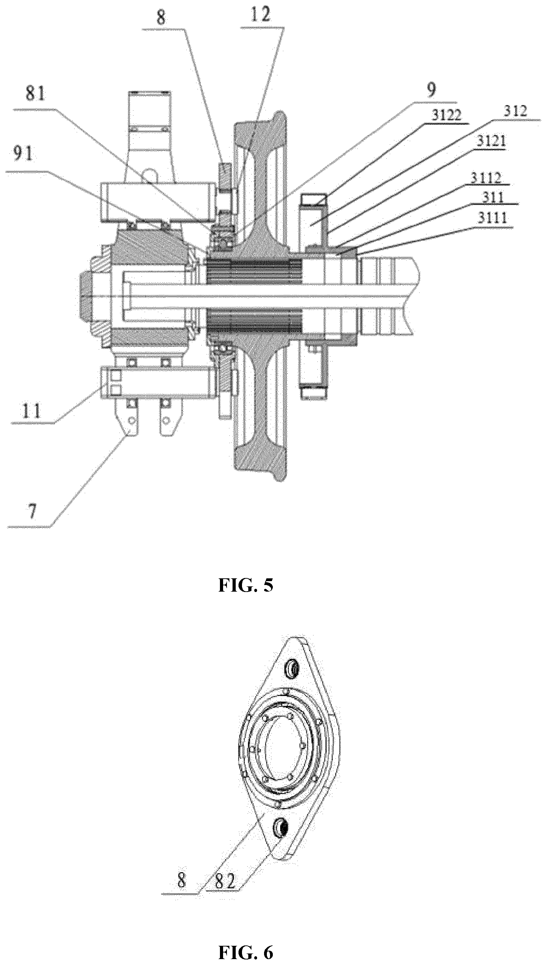

As shown in FIGS. 5-8, the gauge-changing wheelset according to the present embodiment further includes:

a locking mechanism 3 disposed in each of the wheels 4 and a lateral drive mechanism 1 provided outside each of the wheel 4.

Specifically, the locking mechanism 3 includes traction electromagnets 32 each of which includes a traction coil 32-1 and a movable core 32-2 driven to move by the traction coil 32-1, a plurality of locking holes 41 are disposed on inner hubs of wheels of a gauge-changing wheelset at intervals in the axial direction, the position of the traction coil 32-1 is fixed, and the movable core 32-2 is directed to the position of one of the locking holes 41. Further, the movable core 32-2 and the locking hole 41 are arranged coaxially, and the movable core 32-2 may insert into or remove from a corresponding locking hole 41. Specifically, when the vehicle is running normally, the movable core 32-2 is located in a locking hole 41 of a corresponding gauge and both are locked. When the gauge needs to be changed, the wheels 4 need to be unlocked first. At this time, the traction coil 32-1 is energized, and the movable core 32-2 moves in a direction close to the traction coil 32-1 under the action of a magnetic force of the traction coil 32-1 and the movable core 32-2 is retracted and removed from the locking hole 41 to lock the wheels.

Further, the lateral drive mechanism 1 is fixed on the axle box body 7. The lateral drive mechanism 1 includes an electric cylinder 11, and the protruding end of the electric cylinder 11 is used to push or pull the unlocked wheels 4 to change the gauge of the wheel 4. After the gauge is changed, the traction coil 32-1 is de-energized, the magnetic field force of the traction coil 32-1 on the movable core 32-2 disappears, and the movable core 32-2 moves in a direction away from the traction coil 32-1 under the action of external force, that is, moves in a direction closer to the locking hole 41, and is inserted into the locking holes 41 to be locked again.

In the present embodiment, the wheels 4 can be locked and unlocked directly by the traction electromagnet 32 without additionally using a structure for assisting locking and unlocking on a ground apparatus for variable gauge, and thus the structure of the ground apparatus for variable gauge is simplified and becomes relatively simple and more reliable. Wheels 4 are pushed or pulled by the electric cylinder 11 of the lateral drive mechanism 1 to provide the lateral movement of the wheels 4, so that the lateral movement of the wheels 4 is more stable, the wear between the wheels and the axles may be decreased, and the reliability of the locking mechanism for the gauge-changing wheelset is improved.

In an embodiment of the present application, as shown in FIG. 5, in order to facilitate the connection between electric cylinders 11 and the wheels 4, the lateral drive mechanism 1 further includes a movable disk 8 including a disk body provided with a central through hole and a bearing fixedly mounted in the central through hole, preferably a four-point angular contact ball bearing 9. An inner ring of the bearing is fixedly connected on the outer hub of each of the wheels 4 to ensure that the disk body remains relatively stationary when the axle 5 is rotated. The disk body is provided with connecting holes 82 connected with the extension end of the electric cylinder 11, and the extension end of the electric cylinder 11 is fixedly connected to the connecting holes 82, so that the extension end of the electric cylinder 11 may drive the wheels 4 to move synchronously when it moves.

It should be noted that, since the bearing here needs to withstand large bidirectional axial force, but basically does not withstand radial force, the four-point angular contact ball bearing 9 is preferably used.

In order to reach the train speed of 400km/h, the limiting speed of the four-point angular contact ball

$$\frac{4 \times 10^8}{60 \Pi D}$$

bearing 9 should not be less than (r/min), where D is the diameter of each of the wheels 4 (unit: mm). A (axial) width of the four-point angular contact ball bearing 9 should be kept at about 45mm, and a (radial) thickness thereof should be as small as possible under the premise of meeting the conditions. The four-point angular contact ball bearing 9 does not have an axial internal clearance. In addition, the four-point angular contact ball bearing 9 mainly bears two-way axial forces, so two-way retaining rings should be disposed on the inner and outer sides. Accordingly, the movable disk retaining ring 81 is disposed on an outer ring of the bearing corresponding to the movable disk 8.

In an embodiment of the present application, in order to ensure the force balance of the wheels 4, each of the lateral drive mechanisms 1 includes two electric cylinders 11 fixed in parallel on the axle box body 7 and separately disposed on both sides of the hubs of the wheels 4, the opposite ends of the disk body are respectively provided with the connecting holes 82, the extension end of each of the electric cylinders 11 passes through the connecting holes 82, and is fixedly connected with the connecting holes 82 through fasteners. Two connecting holes 82 are arranged symmetrically with respect to the center through hole of the disk body to ensure that the forces applied to the wheels 4 at both sides are equal and the forces on the wheels are balanced.

In an embodiment of the present application, the electric cylinder 11 is a planetary roller screw pair electric cylinder having characteristics of a large cross-sectional area of rolling elements for bearing force, simultaneous being loaded at any time and no cyclic alternating stress. Due to space constraints, an integrated planetary roller screw electric cylinder is adopted here. A screw extension end of the planetary roller screw electric cylinder is provided with a positioning lug boss and an external thread. In order to prevent vibration from affecting the planetary roller screw electric cylinder, each of the connecting holes 82 is provided with a rubber node, but the rubber node cannot protrude outside of the connecting holes, to prevent from affecting the accuracy of the electric cylinder 11 in the lateral direction. The screw extension end passes through the rubber nodes and the positioning lug boss abuts against one end surface of each of the connecting holes 82, and is screwed on the external thread using a nut 12 so that the nut 12 abuts against the other end surface of each of the connecting holes 82 so that both are connected firmly to ensure that after the screw extension end is connected with each of the connecting holes 82, no relative displacement exists between the electric cylinder 11 and the movable disk 8 and thus the wheels 4 move accurately.

When the gauge changes from wide to narrow, the electric cylinder 11 pushes the movable disk 8 to move away from the axle box body 7, and the movable disk 8 drives the wheels 4 to move at the same time, thereby a broad gauge being changed into a narrow gauge from a broad gauge.

When the gauge changes from narrow to wide, the electric cylinder 11 pulls the movable disk 8 to move towards the axle box body 7, and the movable disk 8 drives the wheels 4 to move at the same time, thereby a narrow gauge being changed into a broad gauge.

In an embodiment of the present application, as shown in FIG. 6, in order to reduce the weight, the movable disk is in a similar rhombus shape, and top corners of the similar rhombus shape are constructed as arcs that are transitionally connected to adjacent sides. A pair of the connecting holes are respectively disposed in a pair of top corners on the movable disk opposite to each other. Since no connecting holes 82 are disposed in the other pair of top corners, the other pair of top corners may be configured as arc surfaces matching the outer circumference of the central through hole of the movable disk so as to further reduce the weight of the movable disk 8 and save materials and installation space of the movable disk 8.

The embodiment of the present application also provides a gauge-changing bogie, which includes the abvoe gauge-changing wheelset. The gauge-changing wheelset is divided into a power wheelset and a non-powered wheelset. As shown in FIG. 2, a lateral drive mechanism 1 of the power wheelset is mounted outside the wheels 4, the locking mechanism 3 is mounted inside the wheels 4, and the gear box and two brake discs 2 are mounted inside the wheels 4. Since the brake discs 2 are mounted on the axle 5, in order to prevent a spatial conflict between the brake discs 2 and the drive motor 10, a two-stage deceleration is adopted here which has a bogie with a bigger axle base. In addition, the power bogie has an end beam on which a brake unit and a dust cover pull rod are mounted. A hanger 64 is disposed on an outer ring of the dust cover 6, which fits with the dust cover pull rod connected to the end beam to prevent it from rotating with the sleeve under the friction force of the notch of the sleeve.

As shown in FIG. 3, the non-powered wheel set is made by removing the gear box of the power wheelset, and equidistantly distributing the brake discs 2, and the original structure of the bogie may be adopted.

In order to avoid scratches of the axle 5 when the wheels 4 move, and the force required for the movement of the wheels 4, that is, the output power of the drive mechanism is decreased, the wheels 4 is unloaded here by supporting a support rail at the axle box. Therefore, a set of support rails needs be mounted on both sides of the ground rail.

In the track section in which the gauge is changed, the support rail appears first, and a steel rail for a narrow-track-gauge and the support rail coexist for a section; then, the steel rail disappears, and only the support rail is used for supporting, and the change of the gauge is completed in this section. Next, a steel rail for a broad-track-gauge and the support rail coexist for a section. Finally, the support rail gradually descends, disappears, and a broad-track-gauge rail line is entered.

The height from a support surface of the support rail to a horizontal plane is the same as the height from the bottom of the axle box to the horizontal plane, two ends have small heights such that the loading/unloading process proceeds slowly and the occurrence of impact is avoided. Side stoppers are provided outside to prevent the train from moving laterally and slipping out of the support surface.

The gauge change process has five steps of unloading, i.e., unlocking, laterally moving, locking, and loading of the wheels 4. Here, the gauge changing from a standard gauge of 1435mm to wide gauge of 1520mm is taken as an example to illustrate the gauge change process of the active gauge change solution.

In the first step, the wheels 4 are unloaded: when the train runs from the gauge of 1435mm to a gauge changing section, the speed is decreased to 15m/s, and then as the train advances, the support track gradually rises, and the support track is in contact with the axle box body 7 and runs for a short distance, the standard steel track disappears, and the wheels 4 is completely unloaded.

In the second step, the wheel 4 is unlocked: an apparatus installed in the ground support rail sends a signal indicating the wheels 4 are unloaded. The control mechanism supplies power to the locking mechanism 3, and in the traction electromagnet 32, the chuck coil 34 and the traction coil 32-1 are energized in sequence, the movable core 32-2 is unlocked and drives locking pin 33 to be retracted, and the wheels 4 are unlocked. When the traction electromagnet 32 detects that the movable core 32-2 is in the retracted position, a signal indicating the wheels 4 are unlocked is sent out, and the control mechanism de-energizes the chuck coil 34 and the traction coil 32-1 in turn to prevent the coil from being burnt when it is energized for a long time. At this time, the movable core 32-2 is clipped in the unlocked position of the wheel 4 by the lock pin 35.

In the third step, the gauge is changed: after the control mechanism receives the signal indicating the wheels 4 are unlocked, it de-energizes the chuck coil 34 and the traction coil 32-1 in turn, and energizes the planetary roller screw electric cylinder (having an energizing direction opposite to a previous energizing direction, that is, the reverse direction is energized last time, and the forward direction is energized this time) The electric cylinder 11 pushes/pulls the movable disk 8 to make the wheels 4 reach a new gauge position.

In the fourth step, the wheels 4 are locked: after the electric cylinder 11 reaches the gauge position, a signal indicating the gauge change is completed is sent out, and then the chuck coil 34 of the traction electromagnet 32 is energized, and the movable core 32-2 is unlocked and the locking pin 33 is driven by the spring restoring force to extend out. When a detection device detects that the movable core 32-2 is in the extended-out position, a signal indicating the wheels 4 are locked is sent out, the chuck coil 34 is de-energized, and the lock pin 35 locks the movable core 32-2 and the locking pin 33 at a locked position of the wheels 4 to prevent it from moving under the centrifugal force.

In the fifth step, wheels 4 are loaded: the steel rail for the gauge of 1520mm appears, the support track gradually drops, and the wheels 4 are reloaded; the entire gauge change process finished.

It can be seen from the above embodiments, according to the present application, based on the lateral movement of the wheels by the lateral drive mechanism, the wheels 4 can move laterally more stable, the wear between the wheels and the axle may be decreased, and the reliability of the gauge-changing wheelset is improved. At the same time, the active structure for variable gauge is provided, and the movable core is controlled to be extended or retracted based on the turning on or turning off of the traction electromagnet and thus the wheels are locked or unlocked directly without an external apparatus such that the ground apparatus for variable gauge becomes simpler and has reduced cost. Moreover, signals for variable gauge are output by a vehicle control system which improves the reliability and efficiency of actions for variable gauge.

The embodiments above are only the preferred embodiments of the present disclosure, and are not intended to limit the disclosure. The scope of protection is defined by the appended claims.

**Claims**

1. A locking mechanism (3) for a gauge-changing wheelset, wherein a plurality of locking holes (41) are disposed on an inner hub of wheels (4) of the gauge-changing wheelset at intervals in an axial direction;

   the locking mechanism (3) comprising a locking pin (33) and a traction electromagnet (32);
   wherein the traction electromagnet (32) comprises a traction coil (32-1) and a movable core (32-2) being controlled to move by turning on and off the traction coil (32-1),
   wherein the locking pin (33) is fixedly connected to an end of the movable core (32-2) away from the traction coil (32-1),
   wherein the movable core (32-2) is configured to drive the locking pin (33) to insert into or remove from the locking hole (41) to lock or unlock the wheels (4); and
   the locking mechanism (3) further comprising a sleeve (31),
   wherein the sleeve (31) comprises a first sleeve (311) and a second sleeve (312) connected with the first sleeve (311),

the first sleeve (311) comprises a first end cover (3111) and a first barrel (3112), the first barrel (3112) extending toward the wheel (4) side in a circumferential direction of the first end cover (3111), and the first end cover (3111) is provided with an axial through hole and is tightly connectable with an axle (5) of the gauge-changing wheelset through the axial through hole; the second sleeve (312) comprises a second end cover (3121) integrally connected with the first barrel (3112) in the circumferential direction of the first barrel (3112) and a second barrel (3122) extending toward the wheel (4) side in a circumferential direction of the second end cover (3121); and, in a mounted position of the sleeve (31) on the axle (5), the inner hub of the wheel (4) extends into the first barrel (3112) and is slidably fitted with the first barrel (3112), and a through hole through which the movable core (32-2) passes is disposed on an inner wall of the first barrel (3112) in a direction corresponding to the locking hole (41).

2. The locking mechanism (3) for a gauge-changing wheelset of claim 1, wherein the traction electromagnet (32) further comprises a housing fixed on an inner side wall of the second end cover (3121), the traction coil (32-1) is disposed in the housing, and the movable core (32-2) has an end penetrating through the traction coil (32-1) and is configured to drive the locking pin (33) to pass through the through hole into a corresponding locking hole (41) to lock the wheel (4), and configured to drive the locking pin (33) to remove from the locking hole (41) to unlock the wheels (4).

3. The locking mechanism (3) for a gauge-changing wheelset of claim 2, wherein the traction electromagnet (32) further comprises chuck coils (34) disposed on opposite sides of the movable core (32-2), respectively, and a lock pin (35) fitted with each of the chuck coils (34),
wherein two annular lock grooves are disposed at intervals in an axial direction of the movable core (32-2) and the lock pin (35) is configured to be inserted into one of the annular lock grooves to fix the movable core (32-2) in an unlocked position or a locked position.

4. The locking mechanism (3) for a gauge-changing wheelset of claim 3, wherein a cavity for accommodating an end of the lock pin (35) is disposed on a position of the chuck coil (34) on which the lock pin (35) is mounted, the cavity having a gap in which the lock pin (35) is movable, the gap being preferably 3-4 mm; an end of the lock pin (35) located outside the cavity is provided with an annular lug boss, and the lock pin (35) is provided with a first spring having an end abutting against the annular lug boss and another end abutting against the outside of the cavity; and
a second spring is disposed on an end of the movable core (32-2) located outside the housing, an end of the second spring abuts against the outside of the housing, and another end of the second spring abuts against an annular flange at the end of the movable core (32-2).

5. The locking mechanism (3) for a gauge-changing wheelset of claim 1, wherein the inner hub of the wheel (4) is provided with a plurality of rows of the locking holes (41) in a circumferential direction of the inner hub of the wheel (4), and each row of the locking holes (41) includes a plurality of the locking holes (41) disposed at intervals in the axial direction of the inner hub of the wheel (4), and a distance between two adjacent locking holes (41) is equal to a half of the gauge to be changed, and
the traction electromagnet (32) comprises a plurality of traction electromagnets (32) distributed along an inner side wall of the second end cover (3121) in a circumferential direction, and the plurality of the traction electromagnets (32) correspond to the plurality of rows of the locking holes (41) one by one.

6. The locking mechanism (3) for a gauge-changing wheelset of claim 1,

wherein a dust cover (6) is connected with an outer periphery of the second barrel (3122), and the dust cover (6) comprises an annular cover body and a retaining ring disposed on both ends of the annular cover body in an axial direction of the annular cover body, a plurality of electric brushes (61) are disposed in the cover body, a pair of annular mounting grooves surrounding an outer circumference of the second barrel (3122) are disposed at intervals in an axial direction of the second barrel (3122), and inner circumferences of retaining rings are respectively mounted in the annular mounting grooves;
chips (62) corresponding to the electric brushes (61) one by one are disposed on outer circumference of the second barrel (3122) and between the pair of annular mounting grooves, the chips (62) are mounted on insulating rubbers (63), and are spaced apart by the insulating rubber (63); and
the traction coil (32-1) and the chuck coils (34) are respectively electrically connected to corresponding chips (62), the second barrel (3122) rotates with respect to the dust cover (6) to form electric connections between the chips (62) and the electric brushes (61) rub so as to supply power to the traction coil (32-1) and the chuck coils (34); and

wherein the plurality of electric brushes (61) comprise two pairs of electric brushes (61), the chips (62) comprise two pairs of chips (62), the traction coil (32-1) is electrically connected to one of the two pairs of the chips (62), and the chuck coil (34) is electrically connected to another one of the two pairs of chips (62).

7. A gauge-changing wheelset, comprising wheels (4) and an axle (5), the wheels (4) being disposed on both ends of the axle (5) and are splined to the axle (5), wherein the gauge-changing wheelset further comprises the locking mechanism (3) for a gauge-changing wheelset of any one of claims 1-6.

8. A gauge-changing wheelset, comprising wheels (4) and an axle (5), the wheels (4) being disposed on both ends of the axle (5) and splined to the axle (5), and both ends of the axle (5) located outside the wheels (4) are respectively supported in an axle box body (7), wherein the gauge-changing wheelset further comprises a lateral drive mechanism (1) and the locking mechanism (3) for a gauge-changing wheelset of any one of claims 1-6;

the locking mechanism (3) respectively disposed on the inner side of each of the wheels (4); and
the lateral drive mechanism (1) respectively disposed on outside of each wheel (4), and fixed on the axle box body (7), wherein the lateral drive mechanism (1) comprises an electric cylinder (11) having an extension end for pushing or pulling unlocked wheels (4) to change gauge of wheels (4).

9. The gauge-changing wheelset of claim 8, **characterized in that** the lateral drive mechanism (1) further comprises a movable disk (8) having a disk body provided with a central through hole and a bearing fixedly installed in the central through hole, and an inner ring of the bearing is fixedly connected with an outer hub of each wheel (4); and
the disk body is provided with a connecting hole (82) connected with the extension end of the electric cylinder (11).

10. The gauge-changing wheelset of claim 9, **characterized in that** each lateral drive mechanism (1) comprises two electric cylinders (11) fixed in parallel on the axle (5) box body, and the connecting holes (82) are respectively disposed on opposite ends of the disk body, the extension end of each electric cylinder (11) passes through the connecting hole (82) and is fixedly connected to the connecting hole (82) by a fastener.

11. The gauge-changing wheelset of claim 10, **characterized in that** the electric cylinder (11) is a planetary roller screw electric cylinder, and a screw extension end of the planetary roller screw electric cylinder is provided with a positioning lug boss and an external thread, and the connecting hole (82) is provided with a rubber node; and
the screw extension end passes through the rubber node and the positioning lug boss abuts against an end surface of the connecting hole (82), and the screw extension end is screwed on the external thread by a nut (12) so that the nut (12) abuts against another end surface of the connecting hole (82).

12. The gauge-changing wheelset of claim 11, **characterized in that** the disk body is in a similar rhombus shape, and top corners of the similar rhombus shape are constructed as arcs that are transitionally connected to adjacent sides, and a pair of connecting holes (82) are respectively disposed in a pair of top corners on the disk body opposite to each other.

13. The gauge-changing wheelset of claim 8, **characterized in that** the locking mechanism (3) further comprises a sleeve (31) and a locking pin (33), the sleeve (31) comprises a first sleeve (311) and a second sleeve (312) connected with the first sleeve (311); the first sleeve (311) comprises a first end cover (3111) and a first barrel (3112), the first barrel (3112) extending toward the wheel (4) side in a circumferential direction of the first end cover (3111); and the first end cover (3111) is provided with an axial through hole, and is tightly connected on an axle (5) through the axial through hole;

the second sleeve (312) comprises a second end cover (3121) integrally connected with the first barrel (3112) in the circumferential direction of the first barrel (3112) and a second barrel (3122) extending toward the wheel (4) side in a circumferential direction of the second end cover (3121); and
the inner hub of the wheel (4) extends into the first barrel (3112), and the first barrel (3112) is provided with a through hole through which the movable core (32-2) passes;

the traction electromagnet (32) further comprises a housing fixed on an inner side wall of the second end cover (3121), the traction coil (32-1) is disposed in the housing, and the movable core (32-2) has an end penetrating through the traction coil (32-1) and another other end fixedly connected to the locking pin (33); and the movable core (32-2) is configured to drive the locking pin (33) to pass through the through hole into a corresponding locking hole (41) to lock the wheels (4), and configured to drive the locking pin (33) to remove from the locking hole (41) to unlock the wheels (4).

14. The gauge-changing wheelset of claim 13, **characterized in that** the inner hub of the wheel (4) is provided with a plurality of rows of the locking holes (41) in a circumferential direction of the inner hub of the wheel (4), and each row of the locking holes (41) includes a plurality of the locking holes (41) disposed at intervals in the axial direction of the inner hub of the wheel (4), and a distance between two adjacent locking holes (41) is equal to a half of the gauge to be changed, and

the traction electromagnets (32) further comprises chuck coils (34) disposed on opposite sides of the movable core (32-2), respectively, and a lock pin (35) fitted with each of the chuck coils (34), wherein two annular lock grooves are disposed at intervals in an axial direction of the movable core (32-2) and the lock pin (35) is configured to be inserted into one of the annular lock grooves to fix the movable core (32-2) in an unlocked position or a locked position.

15. The gauge-changing wheelset of claim 14, **characterized in that** a cavity for accommodating an end of the lock pin (35) is disposed on a position of the chuck coil (34) on which the lock pin (35) is mounted, the cavity having a gap in which the lock pin (35) is movable, an end of the lock pin (35) located outside the cavity is provided with an annular lug boss, and the lock pin (35) is connected with a first spring having an end abutting against the annular lug boss and another end abutting against the outside of the cavity; and

a second spring is connected on an end of the movable core (32-2) located outside the housing, an end of the second spring abuts against the outside of the housing, and another end of the second spring abuts against an annular flange at the end of the movable core (32-2).

16. The gauge-changing wheelset of claim 15, further comprising a dust cover (6) connected on an outer periphery of the second barrel (3122),

**characterized in that** the dust cover (6) comprises an annular cover body and a retaining ring disposed on both ends of the annular cover body in an axial direction of the annular cover body; a plurality of electric brushes (61) are disposed in the cover body, a pair of annular mounting grooves surrounding an outer circumference of the second barrel (3122) are disposed at intervals in an axial direction of the second barrel (3122), and inner circumferences of retaining rings are respectively mounted in the annular mounting groove;

chips (62) corresponding to the electric brushes (61) one by one are disposed on outer circumference of the second barrel (3122) and between the pair of annular mounting grooves, the chips (62) being disposed on the insulating rubber (63), and the adjacent chips (62) are separated by the insulating rubber (63); and

the traction coil (32-1) and the chuck coils (34) are respectively electrically connected to corresponding chips (62), the second barrel (3122) rotating with respect to the dust cover (6) to form electric connections between the chips (62) and the electric brushes (61) rub so as to supply power to the traction coil (32-1) and the chuck coils (34);

wherein the plurality of electric brushes (61) comprise two pairs of electric brushes (61), the chips (62) comprise two pairs of chips (62), the traction coil (32-1) is electrically connected to one of the two pairs of the chips (62), and the chuck coil (34) is electrically connected to another one of the two pairs of chips (62); and

the two pairs of electric brushes (61) are respectively connected to a power supply unit, and the power supply unit is connected to a control mechanism.

17. A gauge-changing bogie comprising the gauge-changing wheelset according to any one of claims 8 to 16.

**Patentansprüche**

1. Verriegelungsmechanismus (3) für einen Radsatz mit veränderlicher Spurweite, wobei mehrere Verriegelungslöcher (41) an einer inneren Nabe von Rädern (4) des Radsatzes mit veränderlicher Spurweite in einer axialen Richtung angeordnet sind;

wobei der Verriegelungsmechanismus (3) einen Verriegelungsstift (33) und einen Zugelektromagneten (32) umfasst;

wobei der Zugelektromagnet (32) eine Zugspule (32-1) und einen beweglichen Kern (32-2) umfasst, der gesteuert wird, um sich durch Ein- und Ausschalten der Zugspule (32-1) zu bewegen,

wobei der Verriegelungsstift (33) fest mit einem Ende des beweglichen Kerns (32-2) entfernt von der Zugspule (32-1) verbunden ist,

wobei der bewegliche Kern (32-2) dazu ausgestaltet ist, den Verriegelungsstift (33) zum Einsetzen in oder Entfernen aus dem Verriegelungsloch (41) anzutreiben, um die Räder (4) zu verriegeln oder zu entriegeln; und

der Verriegelungsmechanismus (3) ferner eine Hülse (31) umfasst,

wobei die Hülse (31) eine erste Hülse (311) und eine zweite Hülse (312) umfasst, die mit der ersten Hülse (311) verbunden ist,

die erste Hülse (311) eine erste Endabdeckung (3111) und eine erste Trommel (3112) umfasst, wobei die erste Trommel (3112) sich hin zu der Seite des Rades (4) in einer Umfangsrichtung der ersten Endabdeckung (3111) erstreckt und die erste Endabdeckung (3111) mit einem axialen Durchgangsloch versehen ist und durch das axiale Durchgangsloch fest mit einer Achse (5) des Radsatzes mit veränderlicher Spurweite verbindbar ist;

die zweite Hülse (312) eine zweite Endabdeckung (3121), die einteilig mit der ersten Trommel (3112) in der Umfangsrichtung der ersten Trommel (3112) verbunden ist, und eine zweite Trommel (3122) umfasst, die sich hin zu der Seite des Rades (4) in einer Umfangsrichtung der zweiten Endabdeckung (3121) erstreckt; und in einer montierten Position der Hülse (31) auf der Achse (5) die innere Nabe des Rades (4) sich in die erste Trommel (3112) erstreckt und verschiebbar in die erste Trommel (3112) eingepasst ist, und ein Durchgangsloch, das der bewegliche Kern (32-2) durchquert, an einer inneren Wand der ersten Trommel (3112) in einer Richtung angeordnet ist, die dem Verriegelungsloch (41) entspricht.

2. Verriegelungsmechanismus (3) für einen Radsatz mit veränderlicher Spurweite nach Anspruch 1, wobei der Zugelektromagnet (32) ferner ein Gehäuse umfasst, das an einer inneren Seitenwand der zweiten Endabdeckung (3121) befestigt ist, die Zugspule (32-1) in dem Gehäuse angeordnet ist und der bewegliche Kern (32-2) ein Ende aufweist, das durch die Zugspule (32-1) eindringt und dazu ausgestaltet ist, den Verriegelungsstift (33) anzutreiben, um das Durchgangsloch in ein entsprechendes Verriegelungsloch (41) zu durchqueren, um das Rad (4) zu verriegeln, und dazu ausgestaltet ist, den Verriegelungsstift (33) anzutreiben, um aus dem Verriegelungsloch (41) entfernt zu werden, um die Räder (4) zu entriegeln.

3. Verriegelungsmechanismus (3) für einen Radsatz mit veränderlicher Spurweite nach Anspruch 2, wobei der Zugelektromagnet (32) ferner Futterspulen (34), die jeweils auf entgegengesetzten Seiten des beweglichen Kerns (32-2) angeordnet sind, und einen Sperrstift (35) umfasst, der in jede der Futterspulen (34) eingepasst ist,

wobei zwei ringförmige Sperrnuten in Intervallen in einer axialen Richtung des beweglichen Kerns (32-2) angeordnet sind und der Sperrstift (35) dazu ausgestaltet ist, in eine der ringförmigen Sperrnuten eingesetzt zu werden, um den beweglichen Kern (32-2) in einer entriegelten Position oder einer verriegelten Position zu befestigen.

4. Verriegelungsmechanismus (3) für einen Radsatz mit veränderlicher Spurweite nach Anspruch 3, wobei ein Hohlraum zum Aufnehmen eines Endes des Sperrstifts (35) an einer Position der Futterspule (34) angeordnet ist, an welcher der Sperrstift (35) montiert ist, wobei der Hohlraum eine Lücke aufweist, in welcher der Sperrstift (35) beweglich ist, wobei die Lücke vorzugsweise 3 bis 4 mm beträgt;

ein Ende des Sperrstifts (35), das sich außerhalb des Hohlraums befindet, mit einem ringförmigen Ansatzwulst versehen ist und der Sperrstift (35) mit einer ersten Feder versehen ist, die ein Ende, das gegen den ringförmigen Ansatzwulst anstößt, und ein anderes Ende aufweist, das gegen die Außenseite des Hohlraums anstößt; und eine zweite Feder an einem Ende des beweglichen Kerns (32-2) angeordnet ist, das sich außerhalb des Gehäuses befindet, ein Ende der zweiten Feder gegen die Außenseite des Gehäuses anstößt und ein anderes Ende der zweiten Feder gegen einen ringförmigen Flansch am Ende des beweglichen Kerns (32-2) anstößt.

5. Verriegelungsmechanismus (3) für einen Radsatz mit veränderlicher Spurweite nach Anspruch 1, wobei die innere Nabe des Rades (4) mit mehreren Reihen der Verriegelungslöcher (41) in einer Umfangsrichtung der inneren Nabe des Rades (4) versehen ist und jede Reihe von den Verriegelungslöchern (41) mehrere von den Verriegelungslöchern (41) umfasst, die in Intervallen in der axialen Richtung der inneren Nabe des Rades (4) angeordnet sind, und ein Abstand zwischen zwei benachbarten Verriegelungslöchern (41) gleich einer Hälfte der zu ändernden Spurweite ist, und der Zugelektromagnet (32) mehrere Zugelektromagneten (32) umfasst, die entlang einer inneren Seitenwand der zweiten Endabdeckung (3121) in einer Umfangsrichtung verteilt sind, und die mehreren von den Zugelektromagneten (32) eins zu eins den mehreren Reihen der Verriegelungslöcher (41) entsprechen.

6. Verriegelungsmechanismus (3) für einen Radsatz mit veränderlicher Spurweite nach Anspruch 1, wobei eine Staubabdeckung (6) mit einem äußeren Umfang der zweiten Trommel (3122) verbunden ist und die Staubabdeckung (6) einen ringförmigen Abdeckungskörper und einen Rückhaltering umfasst, der an beiden Enden des ringförmigen Abdeckungskörpers in einer axialen Richtung des ringförmigen Abdeckungskörpers angeordnet ist, mehrere elektrische Bürsten (61) in dem Abdeckungskörper angeordnet sind, ein Paar ringförmige Montagenuten, die einen äußeren Umfang der zweiten Trommel (3122) umgeben, in Intervallen in einer axialen Richtung der zweiten Trommel (3122) angeordnet sind und innere Umfänge von Rückhalteringen jeweils in den ringförmigen Montagenuten montiert sind;

Plättchen (62), die eins zu eins den elektrischen Bürsten (61) entsprechen, am äußeren Umfang der zweiten Trommel (3122) und zwischen dem Paar ringförmiger Montagenuten angeordnet sind, wobei die Plättchen (62) auf Isoliergummis (63) montiert sind und durch den Isoliergummi (63) voneinander beabstandet sind; und

die Zugspule (32-1) und die Futterspulen (34) jeweils elektrisch mit entsprechenden Plättchen (62) verbunden sind, die zweite Trommel (3122) sich in Bezug auf die Staubabdeckung (6) dreht, um elektrische Verbindungen zwischen den Plättchen (62) zu bilden, und die elektrischen Bürsten (61) reiben, um die Zugspule (32-1) und die Futterspulen (34) mit Leistung zu versorgen; und

wobei die mehreren elektrischen Bürsten (61) zwei Paare elektrischer Bürsten (61) umfassen, die Plättchen (62) zwei Paare Plättchen (62) umfassen, die Zugspule (32-1) elektrisch mit einem der zwei Paare der Plättchen (62) verbunden ist und die Futterspule (34) elektrisch mit einem anderen der zwei Paare Plättchen (62) verbunden ist.

7. Radsatz mit veränderlicher Spurweite, der Räder (4) und eine Achse (5) umfasst, wobei die Räder (4) an beiden Enden der Achse (5) angeordnet sind und an der Achse (5) drehfest gelagert sind, wobei der Radsatz mit veränderlicher Spurweite ferner den Verriegelungsmechanismus (3) für einen Radsatz mit veränderlicher Spurweite nach einem der Ansprüche 1 bis 6 umfasst.

8. Radsatz mit veränderlicher Spurweite, der Räder (4) und eine Achse (5) umfasst, wobei die Räder (4) an beiden Ende der Achse (5) angeordnet sind und an der Achse (5) drehfest gelagert sind und beide Enden der Achse (5),

die sich außerhalb der Räder (4) befinden, jeweils in einem Achslagerkörper (7) lagern, wobei der Radsatz mit veränderlicher Spurweite ferner einen seitlichen Antriebsmechanismus (1) und den Verriegelungsmechanismus (3) für einen Radsatz mit veränderlicher Spurweite nach einem der Ansprüche 1 bis 6 umfasst;

der Verriegelungsmechanismus (3) jeweils an der Innenseite von jedem der Räder (4) angeordnet ist; und

der seitliche Antriebsmechanismus (1) jeweils an einer Außenseite von jedem Rad (4) angeordnet ist und an dem Achslagerkörper (7) befestigt ist, wobei der seitliche Antriebsmechanismus (1) einen elektrischen Zylinder (11) umfasst, der ein Erweiterungsende zum Drücken oder Ziehen entriegelter Räder (4) zum Ändern der Spurweite von Rädern (4) aufweist.

9. Radsatz mit veränderlicher Spurweite nach Anspruch 8, **dadurch gekennzeichnet, dass** der seitliche Antriebsmechanismus (1) ferner eine bewegliche Scheibe (8) umfasst, die einen Scheibenkörper aufweist, der mit einem mittleren Durchgangsloch und einem Lager versehen ist, das fest in dem mittleren Durchgangsloch eingerichtet ist, und ein innerer Ring des Lagers fest mit einer äußeren Nabe von jedem Rad (4) verbunden ist; und

der Scheibenkörper mit einem Verbindungsloch (82) versehen ist, das mit dem Erweiterungsende des elektrischen Zylinders (11) verbunden ist.

10. Radsatz mit veränderlicher Spurweite nach Anspruch 9, **dadurch gekennzeichnet, dass** jeder seitliche Antriebsmechanismus (1) zwei elektrische Zylinder (11) umfasst, die parallel an dem Lagerkörper der Achse (5) befestigt sind, und die Verbindungslöcher (82) jeweils an entgegengesetzten Enden des Scheibenkörpers angeordnet sind, das Erweiterungsende von jedem elektrischen Zylinder (11) das Verbindungsloch (82) durchquert und durch ein Befestigungselement fest mit dem Verbindungsloch (82) verbunden ist.

11. Radsatz mit veränderlicher Spurweite nach Anspruch 10, **dadurch gekennzeichnet, dass** der elektrische Zylinder (11) ein elektrischer Planetenrollengewindetriebzylinder ist und ein Gewindeerweiterungsende des elektrischen Planetenrollengewindetriebzylinders mit einem Positionierungsansatzwulst und einem Außengewinde versehen ist und das Verbindungsloch (82) mit einem Gummiknoten versehen ist; und

das Gewindeerweiterungsende den Gummiknoten durchquert und der Positionierungsansatzwust gegen eine Endfläche des Verbindungslochs (82) anstößt und das Gewindeweiterungsende derart durch eine Mutter (12) an das Außengewinde geschraubt ist, dass die Mutter (12) gegen eine andere Endoberfläche des Verbindungslochs (82) anstößt.

12. Radsatz mit veränderlicher Spurweite nach Anspruch 11, **dadurch gekennzeichnet, dass** der Scheibenkörper eine ähnliche Rhombusform aufweist und obere Ecken der ähnlichen Rhombusform als Bögen konstruiert sind, die übergangsweise mit benachbarten Seiten verbunden sind, und ein Paar von Verbindungslöchern (82) jeweils in einem Paar obere Ecken auf dem Scheibenkörper angeordnet sind, die einander entgegengesetzt sind.

13. Radsatz mit veränderlicher Spurweite nach Anspruch 8, **dadurch gekennzeichnet, dass** der Verriegelungsmechanismus (3) ferner eine Hülse (31) und

einen Verriegelungsstift (33) umfasst, wobei die Hülse (31) eine erste Hülse (311) und eine zweite Hülse (312) umfasst, die mit der ersten Hülse (311) verbunden ist; die erste Hülse (311) eine erste Endabdeckung (3111) und eine erste Trommel (3112) umfasst, die erste Trommel (3112) sich hin zur Seite des Rades (4) in einer Umfangsrichtung der ersten Endabdeckung (3111) erstreckt; und die erste Endabdeckung (3111) mit einem axialen Durchgangsloch versehen ist und durch das axiale Durchgangsloch fest an einer Achse (5) verbunden ist; die zweite Hülse (312) eine zweite Endabdeckung (3121), die einteilig mit der ersten Trommel (3112) in der Umfangsrichtung der ersten Trommel (3112) verbunden ist, und eine zweite Trommel (3122) umfasst, die sich hin zur Seite des Rades (4) in einer Umfangsrichtung der zweiten Endabdeckung (3121) erstreckt; und die innere Nabe des Rades (4) sich in die erste Trommel (3112) erstreckt und die erste Trommel (3112) mit einem Durchgangsloch versehen ist, das der bewegliche Kern (32-2) durchquert; der Zugelektromagnet (32) ferner ein Gehäuse umfasst, das an einer inneren Seitenwand der zweiten Endabdeckung (3121) befestigt ist, die Zugspule (32-1) in dem Gehäuse angeordnet ist und der bewegliche Kern (32-2) ein Ende, das durch die Zugspule (32-1) eindringt, und ein anderes Ende aufweist, das fest mit dem Verriegelungsstift (33) verbunden ist; und der bewegliche Kern (32-2) dazu ausgestaltet ist, den Verriegelungsstift (33) anzutreiben, um das Durchgangsloch in ein entsprechendes Verriegelungsloch (41) zu durchqueren, um die Räder (4) zu verriegeln, und dazu ausgestaltet ist, den Verriegelungsstift (33) anzutreiben, um von dem Verriegelungsloch (41) entfernt zu werden, um die Räder (4) zu entriegeln.

14. Radsatz mit veränderlicher Spurweite nach Anspruch 13, **dadurch gekennzeichnet, dass** die innere Nabe des Rades (4) mit mehreren Reihen von den Verriegelungslöchern (41) in einer Umfangsrichtung der inneren Nabe des Rades (4) versehen ist und jede Reihe von den Verriegelungslöchern (41) mehrere von den Verriegelungslöchern (41) umfasst, die in Intervallen in der axialen Richtung der inneren Nabe des Rades (4) angeordnet sind, und ein Abstand zwischen zwei benachbarten Verriegelungslöchern (41) gleich einer Hälfte der zu ändernden Spurweite ist, und der Zugelektromagnet (32) ferner Futterspulen (34), die jeweils an entgegengesetzten Seiten des beweglichen Kerns (32-2) angeordnet sind, und einen Sperrstift (35) umfasst, der in jede der Futterspulen (34) eingepasst ist, wobei zwei ringförmige Sperrnuten in Intervallen in einer axialen Richtung des beweglichen Kerns (32-2) angeordnet sind und der Sperrstift (35) dazu ausgestaltet ist, in eine der ringförmigen Sperrnuten eingesetzt zu werden, um den beweglichen Kern (32-2) in einer entriegelten Position oder einer verriegelten Position zu befestigen.

15. Radsatz mit veränderlicher Spurweite nach Anspruch 14, **dadurch gekennzeichnet, dass** ein Hohlraum zum Aufnehmen eines Endes des Sperrstifts (35) an einer Position der Futterspule (34) angeordnet ist, an welcher der Sperrstift (35) montiert ist, wobei der Hohlraum eine Lücke aufweist, in die der Sperrstift (35) beweglich ist, ein Ende des Sperrstifts (35), das sich außerhalb des Hohlraums befindet, mit einem ringförmigen Ansatzwulst versehen ist und der Sperrstift (35) mit einer ersten Feder versehen ist, die ein Ende, das gegen den ringförmigen Ansatzwulst anstößt, und ein anderes Ende aufweist, das gegen die Außenseite des Hohlraums anstößt; und eine zweite Feder an einem Ende des beweglichen Kerns (32-2) verbunden ist, das sich außerhalb des Gehäuses befindet, ein Ende der zweiten Feder gegen die Außenseite des Gehäuses anstößt und ein anderes Ende der zweiten Feder gegen einen ringförmigen Flansch am Ende des beweglichen Kerns (32-2) anstößt.

16. Radsatz mit veränderlicher Spurweite nach Anspruch 15, das ferner eine Staubabdeckung (6) umfasst, die mit einem äußeren Umfang der zweiten Trommel (3122) verbunden ist,

**dadurch gekennzeichnet, dass** die Staubabdeckung (6) einen ringförmigen Abdeckungskörper und einen Rückhaltering umfasst, der an beiden Enden des ringförmigen Abdeckungskörpers in einer axialen Richtung des ringförmigen Abdeckungskörpers angeordnet ist; mehrere elektrische Bürsten (61) in dem Abdeckungskörper angeordnet sind, ein Paar ringförmige Montagenuten, die einen äußeren Umfang der zweiten Trommel (3122) umgeben, in Intervallen in einer axialen Richtung der zweiten Trommel (3122) angeordnet sind und Innenumfänge von Rückhalteringen jeweils in der ringförmigen Montagenut montiert sind; Plättchen (62), die eins zu eins den elektrischen Bürsten (61) entsprechen, am äußeren Umfang der zweiten Trommel (3122) und zwischen dem Paar ringförmiger Montagenuten angeordnet sind, wobei die Plättchen (62) auf dem Isoliergummi (63) angeordnet sind und die benachbarten Plättchen (62) durch den Isoliergummi (63) voneinander getrennt sind; und die Zugspule (31-1) und die Futterspulen (34) jeweils elektrisch mit entsprechenden Plättchen (62) verbunden sind, die zweite Trommel (3122) sich in Bezug auf die Staubabdeckung (6) dreht, um elektrische Verbindungen zwischen den Plättchen (62) zu bilden, und die elektrischen Bürsten (61) reiben, um die Zugspule (32-1) und die Futterspulen (34) mit Leistung zu versorgen; wobei die mehreren elektrischen Bürsten (61) zwei Paare elektrischer Bürsten (61) umfassen, die Plättchen (62) zwei Paare Plättchen (62) umfassen, die Zugspule (32-1) elektrisch mit einem der zwei Paare der Plättchen (62) verbunden ist und die Futterspule (34) elektrisch mit einem anderen der zwei Paare Plättchen (62) verbunden ist; und die zwei Paare elektrische Bürsten (61) jeweils mit einer Leistungsversorgungseinheit verbunden sind und die Leistungsversorgungseinheit mit einem Steuermechanismus verbunden ist.

17. Fahrwerk mit veränderlicher Spurweite, das den Radsatz mit veränderlicher Spurweite nach einem der Ansprüche 8 bis 16 umfasst.

## Revendications

1. Mécanisme de verrouillage (3) pour un ensemble de roues à écartement variable, dans lequel une pluralité de trous de verrouillage (41) sont disposés sur un moyeu interne de roues (4) de l'ensemble de roues à écartement variable à intervalles dans une direction axiale ;

    le mécanisme de verrouillage (3) comprenant une goupille de verrouillage (33) et un électroaimant de traction (32) ; dans lequel l'électro-aimant de traction (32) comprend une bobine de traction (32-1) et un noyau mobile (32-2) commandé pour se déplacer en allumant et en éteignant la bobine de traction (32-1), dans lequel la goupille de verrouillage (33) est reliée de manière fixe à une extrémité du noyau mobile (32-2) éloignée de la bobine de traction (32-1), dans lequel le noyau mobile (32-2) est configuré pour entraîner la goupille de verrouillage (33) à insérer dans ou à retirer du trou de verrouillage (41) pour verrouiller ou déverrouiller les roues (4) ; et le mécanisme de verrouillage (33) comprenant en outre un manchon (31), dans lequel le manchon (31) comprend un premier manchon (311) et un deuxième manchon (312) relié au premier manchon (311),

    le premier manchon (311) comprend un premier couvercle d'extrémité (3111) et un premier barillet (3112), le premier barillet (3112) s'étendant vers le côté roue (4) dans une direction circonférentielle du premier couvercle d'extrémité (3111), et le premier couvercle d'extrémité (3111) est muni d'un trou traversant axial et est étroitement connectable à un essieu (5) de l'ensemble de roues à écartement variable au travers du trou traversant axial ; le deuxième manchon (312) comprend un deuxième couvercle d'extrémité (3121) relié de manière solidaire au premier barillet (3112) dans la direction circonférentielle du premier barillet (3112) et un deuxième barillet (3122) s'étendant vers le côté roue (4) dans une direction circonférentielle du deuxième couvercle d'extrémité (3121) ; et, dans une position où le manchon (31) est monté sur l'essieu (5), le moyeu interne de la roue (4) s'étend dans le premier barillet (3112) et est monté de manière coulissante avec le premier barillet (3112), et un trou traversant au travers duquel passe le noyau mobile (32-2) est disposé sur une paroi interne du premier barillet (3112) dans une direction correspondant au trou de verrouillage (41).

2. Mécanisme de verrouillage (3) pour un ensemble de roues à écartement variable selon la revendication 1, dans lequel l'électroaimant de traction (32) comprend en outre un logement fixé sur une paroi latérale intérieure du deuxième couvercle d'extrémité (3121), la bobine de traction (32-1) est disposée dans le logement, et le noyau mobile (32-2) a une extrémité pénétrant à travers la bobine de traction (32-1) et est configuré pour entraîner la goupille de verrouillage (33) à passer au travers du trou traversant dans un trou de verrouillage (41) correspondant pour verrouiller la roue (4), et configuré pour entraîner la goupille de verrouillage (33) à se retirer du trou de verrouillage (41) pour déverrouiller les roues (4).

3. Mécanisme de verrouillage (3) pour un ensemble de roues à écartement variable selon la revendication 2, dans lequel l'électroaimant de traction (32) comprend en outre des bobines de serrage (34) disposées sur des côtés opposés du noyau mobile (32-2), respectivement, et une goupille de blocage (35) équipant chacune des bobines de serrage (34), dans lequel deux rainures de blocage annulaires sont disposées à intervalles dans une direction axiale du noyau mobile (32-2) et la goupille de blocage (35) est configurée pour être insérée dans l'une des rainures de blocage annulaires pour fixer le noyau mobile (32-2) dans une position déverrouillée ou une position verrouillée.

4. Mécanisme de verrouillage (3) pour un ensemble de roues à écartement variable selon la revendication 3, dans lequel une cavité pour loger une extrémité de la goupille de blocage (35) est disposée sur une position de la bobine de serrage (34) sur laquelle est montée la goupille de blocage (35), la cavité ayant un espace dans lequel la goupille de blocage (35) est mobile, l'espace étant de préférence 3-4mm ; une extrémité de la goupille de blocage (35) située à l'extérieur de la cavité est munie d'un bossage de patte annulaire, et la goupille de blocage (35) est munie d'un premier ressort ayant une extrémité en butée contre le bossage de patte annulaire et une autre extrémité en butée contre l'extérieur de la cavité ; et un deuxième ressort est disposé sur une extrémité du noyau mobile (32-2) située à l'extérieur du logement, une extrémité du deuxième ressort vient en butée contre l'extérieur du logement, et une autre extrémité du deuxième ressort vient en butée contre une bride annulaire à l'extrémité du noyau mobile (32-2).

5. Mécanisme de verrouillage (3) pour un ensemble de roues à écartement variable selon la revendication 1, dans lequel le moyeu interne de la roue (4) est muni d'une pluralité de rangées de trous de verrouillage (41) dans une direction circonférentielle du moyeu interne de la roue (4), et chaque rangée de trous de verrouillage (41) comprend une pluralité de trous de verrouillage (41) disposés à intervalles dans la direction axiale du moyeu interne de la roue (4), et une distance entre deux trous de verrouillage (41) adjacents est égale à la moitié de l'écartement à changer, et l'électroaimant de traction (32) comprend une pluralité d'électroaimants de traction (32) répartis le long d'une paroi latérale intérieure du deuxième couvercle d'extrémité (3121) dans une direction circonférentielle, et la pluralité des électroaimants de traction (32) correspond à la pluralité de rangées des trous de verrouillage (41) un à un.

6. Mécanisme de verrouillage (3) pour un ensemble de roues à écartement variable selon la revendication 1, dans lequel un couvercle anti-poussière (6) est relié à une périphérie extérieure du deuxième barillet (3122), et le couvercle anti-poussière (6) comprend un corps de couvercle annulaire et une bague de retenue disposée aux deux extrémités du corps de couvercle annulaire dans une direction axiale du corps de couvercle annulaire, une pluralité de balais électriques (61) sont disposés dans le corps de couvercle, une paire de rainures de montage annulaires entourant une circonférence extérieure du deuxième barillet (3122) sont disposées à intervalles dans une direction axiale du deuxième barillet (3122), et les circonférences intérieures des anneaux de retenue sont respectivement montées dans les rainures de montage annulaires ;

des puces (62) correspondant aux balais électriques (61) un à un sont disposées sur la circonférence extérieure du deuxième barillet (3122) et entre la paire de rainures de montage annulaires, les puces (62) sont montées sur des caoutchoucs isolants (63), et sont espacées par le caoutchouc isolant (63) ; et la bobine de traction (31-1) et les bobines de serrage (34) sont respectivement connectées électriquement à des puces correspondantes (62), le deuxième barillet (3122) tourne par rapport au couvercle anti-poussière (6) pour former des connexions électriques entre les puces (62) et les balais électriques (61) frottent de manière à alimenter la bobine de traction (32-1) et les bobines de serrage (34) ; et la pluralité de balais électriques (61) comprend deux paires de balais électriques (61), les puces (62) comprennent deux paires de puces (62), la bobine de traction (32-1) est connectée électriquement à l'une des deux paires de puces (62), et la bobine de serrage (34) est connectée électriquement à une autre des deux paires de puces (62).

7. Ensemble de roues à écartement variable, comprenant des roues (4) et un essieu (5), les roues (4) étant disposées aux deux extrémités de l'essieu (5) et étant cannelées sur l'essieu (5), dans lequel l'ensemble de roues à écartement variable comprend en outre le mécanisme de verrouillage (3) pour un ensemble de roues à écartement variable de l'une quelconque des revendications 1-6.

8. Ensemble de roues à écartement variable, comprenant des roues (4) et un essieu (5), les roues (4) étant disposées aux deux extrémités de l'essieu (5) et cannelées sur l'essieu (5), et les deux extrémités de l'essieu (5) situées à l'extérieur des roues (4) sont respectivement supportées dans un corps de boîte d'essieu (7), dans laquelle l'ensemble de roues à écartement variable comprend en outre un mécanisme d'entraînement latéral (1) et le mécanisme de verrouillage (3) pour un ensemble de roues à écartement variable selon l'une quelconque des revendications 1-6 ;

le mécanisme de verrouillage (3) disposé respectivement sur le côté intérieur de chacune des roues (4) ; et le mécanisme d'entraînement latéral (1) disposé respectivement sur l'extérieur de chaque roue (4), et fixé sur le corps de boîte d'essieu (7), dans lequel le mécanisme d'entraînement latéral (1) comprend un vérin électrique (11) ayant une extrémité d'extension pour pousser ou tirer des roues déverrouillées (4) pour changer l'écartement des roues (4).

9. Ensemble de roues à écartement variable selon la revendication 8, **caractérisé en ce que** le mécanisme d'entraînement latéral (1) comprend en outre un disque mobile (8) ayant un corps de disque muni d'un trou traversant central et d'un roulement installé de manière fixe dans le trou traversant central, et une bague intérieure du roulement est reliée de manière solidaire à un moyeu extérieur de chaque roue (4) ; et
le corps de disque est muni d'un trou de raccordement (82) relié à l'extrémité d'extension du vérin électrique (11).

10. Ensemble de roues à écartement variable selon la revendication 9, **caractérisé en ce que** chaque mécanisme d'entraînement latéral (1) comprend deux vérins électriques (11) fixés en parallèle sur le corps de boîte de l'essieu (5), et les trous de raccordement (82) sont respectivement disposés sur des extrémités opposées du corps de disque, l'extrémité d'extension de chaque vérin électrique (11) passe au travers du trou de raccordement (82) et est relié de manière fixe au trou de raccordement (82) par une attache.

11. Ensemble de roues à écartement variable selon la revendication 10, **caractérisé en ce que** le vérin électrique (11) est un vérin électrique à vis à rouleaux planétaires, et une extrémité d'extension de vis du vérin électrique à vis à rouleaux planétaires est munie d'un bossage de patte de positionnement et d'un filetage externe, et le trou de raccordement (82) est muni d'un noeud en caoutchouc ; et
l'extrémité d'extension de vis passe à travers le noeud en caoutchouc et le bossage de patte de positionnement vient en butée contre une surface d'extrémité du trou de raccordement (82), et l'extrémité d'extension de vis est vissée sur le filetage externe par un écrou (12) de sorte que l'écrou vient en butée contre une autre surface d'extrémité du trou de raccordement (82).

12. Ensemble de roues à écartement variable selon la revendication 11, **caractérisé en ce que** le corps de disque a une forme de losange similaire, et les coins supérieurs de la forme de losange similaire sont construits sous la forme d'arcs qui sont connectés de manière transitoire aux côtés adjacents, et une paire de trous de raccordement (82) sont respectivement disposés dans une paire de coins supérieurs sur le corps de disque opposés l'un à l'autre.

13. Ensemble de roues à écartement variable selon la revendication 8, **caractérisé en ce que** le mécanisme de verrouillage (3) comprend en outre un manchon (31) et une goupille de verrouillage (33), le manchon (31) comprend un premier manchon (311) et un deuxième manchon (312) relié au premier manchon; le premier manchon (311) comprend un premier couvercle d'extrémité (3111) et un premier barillet (3112), le premier barillet (3112) s'étendant vers le côté roue (4) dans une direction circonférentielle du premier couvercle d'extrémité (3111); et le premier couvercle d'extrémité (3111) est muni d'un trou traversant axial, et est étroitement connecté sur un essieu (5) à travers le trou traversant axial;

le deuxième manchon (312) comprend un deuxième couvercle d'extrémité (3121) relié de manière solidaire au premier barillet (3112) dans la direction circonférentielle du premier barillet (3112) et un deuxième barillet (3122) s'étendant vers le côté roue (4) dans une direction circonférentielle du deuxième couvercle d'extrémité (3121); et
le moyeu interne de la roue (4) s'étend dans le premier barillet (3112), et le premier barillet (3112) est muni d'un trou traversant au travers duquel passe le noyau mobile (32);
l'électroaimant de traction (32) comprend en outre un logement fixé sur une paroi latérale intérieure du deuxième couvercle d'extrémité (3121), la bobine de traction (32-1) est disposée dans le logement, et le noyau mobile (32-2) a une extrémité pénétrant à travers la bobine de traction (32) et une distincte autre extrémité reliée de manière solidaire à la goupille de verrouillage (33); et le noyau mobile (32-2) est configuré pour entraîner la goupille de verrouillage (33) à passer à travers le trou traversant dans un trou de verrouillage (41) correspondant pour verrouiller les roues (4), et configuré pour entraîner la goupille de verrouillage (33) à se retirer du trou de verrouillage (41) pour déverrouiller les roues (4).

14. Ensemble de roues à écartement variable selon la revendication 13, **caractérisé en ce que** le moyeu interne de la roue (4) est muni d'une pluralité de rangées de trous de verrouillage (41) dans une direction circonférentielle du moyeu interne de la roue (4), et chaque rangée de trous de verrouillage (41) comprend un pluralité de trous de verrouillage (41) disposés à intervalles dans la direction axiale du moyeu interne de la roue (4), et une distance entre deux trous de verrouillage (41) adjacents est égale à la moitié de l'écartement à changer, et
les électroaimants de traction (32) comprennent en outre des bobines de serrage (34) disposées sur des côtés opposés du noyau mobile (32-2), respectivement, et une goupille de blocage (35) équipe chacune des bobines de serrage (34), dans lequel deux rainures de blocage annulaires sont disposées à intervalles dans une direction axiale du noyau mobile (32-2) et la goupille de blocage (35) est configurée pour être insérée dans l'une des rainures de blocage annulaires pour fixer le noyau mobile (32-2) dans une position déverrouillée ou une position verrouillée.

**15.** Ensemble de roues à écartement variable selon la revendication 14, **caractérisé en ce qu'**une cavité pour loger une extrémité de la goupille de blocage (35) est disposée sur une position de la bobine de serrage (34) sur laquelle est montée la goupille de blocage (35), la cavité ayant un espace dans lequel la goupille de blocage (35) est mobile, une extrémité de la goupille de blocage (35) située à l'extérieur de la cavité est munie d'un bossage de patte annulaire, et la goupille de blocage (35) est reliée à un premier ressort ayant une extrémité en butée contre le bossage de patte annulaire et une autre extrémité en butée contre l'extérieur de la cavité; et
un deuxième ressort est relié à une extrémité du noyau mobile (32-2) située à l'extérieur du logement, une extrémité du deuxième ressort vient en butée contre l'extérieur du logement, et une autre extrémité du deuxième ressort vient en butée contre une bride annulaire à l'extrémité du noyau mobile (32-2).

**16.** Ensemble de roues à écartement variable selon la revendication 15, comprenant en outre un couvercle anti-poussière (6) relié à une périphérie extérieure du deuxième barillet (3122),

**caractérisé en ce que** le couvercle anti-poussière (6) comprend un corps de couvercle annulaire et une bague de retenue disposée aux deux extrémités du corps de couvercle annulaire dans une direction axiale du corps de couvercle annulaire, une pluralité de balais électriques (61) sont disposés dans le corps de couvercle, une paire de rainures de montage annulaires entourant une circonférence extérieure du deuxième barillet (3122) sont disposées à intervalles dans une direction axiale du deuxième barillet (3122), et les circonférences intérieures des anneaux de retenue sont respectivement montées dans les rainures de montage annulaires ;
des puces (62) correspondant aux balais électriques (61) un à un sont disposées sur la circonférence extérieure du deuxième barillet (3122) et entre la paire de rainures de montage annulaires, les puces (62) étant montées sur des caoutchoucs isolants (63), et sont séparées par le caoutchouc isolant (63); et
la bobine de traction (31-1) et les bobines de serrage (34) sont respectivement connectées électriquement à des puces correspondantes (62), le deuxième barillet (3122) tournant par rapport au couvercle anti-poussière (6) pour former des connexions électriques entre les puces (62) et les balais électriques (61) frottent de manière à alimenter la bobine de traction (32-1) et les bobines de serrage (34) ; et
dans lequel la pluralité de balais électriques (61) comprend deux paires de balais électriques (61), les puces (62) comprennent deux paires de puces (62), la bobine de traction (32-1) est connectée électriquement à l'une des deux paires de puces (62), et la bobine de serrage (34) est connectée électriquement à une autre des deux paires de puces (62) ; et
les deux paires de balais électriques (61) sont respectivement connectées à une unité d'alimentation, et l'unité d'alimentation est connectée à un mécanisme de commande.

**17.** Bogie à écartement variable comprenant l'ensemble de roues à écartement variable selon l'une quelconque des revendications 8 à 16.

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

FIG. 11

**REFERENCES CITED IN THE DESCRIPTION**

**Patent documents cited in the description**

- CN 2019105411737
- CN 2019105411879
- DE 19533959 A1
- CN 109455040 A